# EUROPEAN PATENT SPECIFICATION

(11) **EP 3 924 222 B1**
(45) Date of publication and mention of the grant of the patent: **04.12.2024**
(21) Application number: 19915034.3
(22) Date of filing: 17.10.2019
(51) Int. Cl.: B60R 11/02, B60R 7/08, H04M 1/60

(54) **SMART SAFE CONSOLE SYSTEM AND METHOD**
INTELLIGENTES SICHERES KONSOLENSYSTEM UND VERFAHREN
SYSTÈME ET PROCÉDÉ DE CONSOLE DE SÉCURITÉ INTELLIGENTE

(30) Priority: 15.02.2019 US 201916277990
(43) Date of publication of application: 22.12.2021
(73) Proprietor: Bastiyali, Tarkan, New York NY 10065 (US)
(72) Inventor: Bastiyali, Tarkan, New York NY 10065 (US)
(74) Representative: van Dam, Vincent
(86) International application number: PCT/US2019/056669
(87) International publication number: WO 2020/167346

(56) References cited:
- US-A1- 2011 290 903
- US-A1- 2012 214 408
- US-A1- 2012 214 408
- US-A1- 2012 253 552
- US-A1- 2014 100 740
- US-A1- 2014 264 075
- US-A1- 2014 287 709
- US-A1- 2015 230 042
- US-A1- 2016 014 263
- US-A1- 2017 138 112
- US-A1- 2018 001 833
- US-B1- 10 027 795
- US-B1- 9 900 417

## Description

### CROSS REFERENCE TO RELATED APPLICATION(S)

The present application is related to and claims priority to United States patent application number, 16/277,990, filed on February 15, 2019.

### TECHNICAL FIELD

The present invention relates generally to the field of vehicle safety of existing art and more specifically relates to containment systems for electronic devices.

### BACKGROUND OF THE INVENTION

The following includes information that may be useful in understanding the present disclosure. It is not an admission that any of the provided information is prior art or material to the presently described or claimed inventions, or that any publication or document that is specifically or implicitly referenced is prior art.

Electronic devices like phones, tablets, smart glasses, and the like are becoming increasingly common. Such devices can be used for a variety of tasks including messaging, phone conversations, social media, navigation, photography, etc. With so many features offered on electronic devices, many people struggle to stop using the device during times they should not such as operating a vehicle. Many vehicle accidents result from distractions caused by electronic devices, which is dangerous for public road safety.

Prior attempts to solve this problem include inhibiting all features and communications to and from electronic device. However, electronic devices offer a variety of resources that can be useful to a driver or operator. Further, family members or friends can become worried when a message or phone call is not returned. Therefore, a suitable solution is required.

U.S. Pat. No. 8,412,123 to Virginia E. Foster relates to a radio opaque container for communication devices upon a vehicle. The described radio opaque container for communication devices upon a vehicle, which has a bottom joined to four walls, a pivoting lid sealing upon the walls, a connector from the container to a vehicle, a locking mechanism keeping the lid closed, and circuitry between the locking mechanism and vehicle that engages the locking mechanism only when vehicle's electrical system is on. In an emergency, the contents within the container remain available to a vehicle operator but the container opens only when vehicle's electrical power has been turned off. The container forms a faraday cage around the contents and prevents equipment placed therein from activating and distracting a vehicle operator. In an alternate embodiment, the container includes a shelf therein.
US 2018/001833 A1 discloses an interface for connecting portable electronic device with a vehicle.

### SUMMARY

In view of the foregoing disadvantages inherent in the known art, the present disclosure provides a novel device for controlling the use of personal electronic devices while driving. The invention is defined by the smart console system according to claim 1. The invention also is defined by the method according to claim 9. The smart safe console systems disclosed to this document have an assembly mounted in a vehicle. The assembly has a safe body that during vehicle use secures an electronic device such as a personal electronic device (mobile phone or the like) against physical access but provides some access to the features of the electronic device during driving. According to the invention, the assembly communicates with the (mobile phone) provider and with the vehicle. In some embodiments, the provider provides Internet services. Some features of the smart safe console system are implemented using sensors that receive information about the vehicle. These sensors can include, among other sensors, a proximity sensor, a motion sensor, a speed sensor, an audio sensor, and audio loudness sensor, and an impact sensor. Some embodiments of the assembly provide power or data communications with electrical accessories such as external electrical accessories. These accessories can include transmitters configured to communicate with a controller and a processor.

According to the invention, a button initiates the ability for the user to interact with the electronic device while the device is secured against physical access by the driver or another user while the vehicle is operated. Sometimes access to the services comes through accessing a virtual assistant on the assembly, the device, or an accessory device. In some embodiments, an electrical accessary emits a fragrance.

In some embodiments, a software application executing on the electronic device executes instructions that cause the device to register and communicate with the assembly.

Some versions of the safe body are configured to include soundproofing material, which can dampen or inhibit electronic-device sounds from reaching the user. The safe body may also include a charger or docking station for the electronic device.

The invention employs a control module that selectively prevents or allows vehicle operation depending upon whether the electronic device is secured in the smart safe. For instance, the presence of a registered smart phone may be used by the assembly to signal the control module to remain 'off' until the smart phone has been secured in the smart safe. Some versions include an ultraviolet disinfecting device or light inside of the smart safe to supply the added feature of sanitizing the electronic device while the device is secured in the smart safe.

In some embodiments methods of using the system to secure a device and improve vehicle safety prevent the vehicle from moving or starting if the electronic device is not properly secured in the smart safe. Some of these embodiments allow access to services provided by the electronic device even while operating the vehicle through interfaces that don't compromise the safety of vehicle occupants. For instance, a virtual assistant device may be used to provide auditory control of electronic device services during vehicle operation.

For purposes of summarizing the invention, certain aspects, advantages, and novel features of the invention have been described. It is to be understood that not necessarily all such advantages may be achieved in accordance with any one particular embodiment of the invention. Thus, the invention may be embodied or carried out in a manner that achieves or optimizes one advantage or group of advantages as taught without necessarily achieving other advantages as may be taught or suggested. The features of the invention which are believed to be novel are particularly pointed out and distinctly claimed in the concluding portion of the specification. These and other features, aspects, and advantages of the present invention will become better understood with reference to the following drawings and detailed description.

### BRIEF DESCRIPTION OF THE DRAWINGS

The figures which accompany the written portion of this specification illustrate embodiments and methods of use for the present disclosure, a smart safe console system and method, constructed and operative according to the teachings of the present disclosure.
FIG. 1 is a perspective view of the smart safe console system during an 'in use' condition, according to an embodiment of the disclosure.
FIG. 2 is a perspective cutaway view of the smart safe console system of FIG. 1, according to an embodiment of the present disclosure.
FIG. 3 is a perspective view of the smart safe console system of FIG. 1, according to an embodiment of the present disclosure. FIG. 4 is a front view of the smart safe console system of FIG.1, according to an embodiment of the present disclosure.
FIG. 5 is a flow diagram illustrating a method of using the smart safe console system, according to an embodiment of the present disclosure.

The various embodiments of the present invention will be described in conjunction with the appended drawings, wherein like designations denote like elements.

### DETAILED DESCRIPTION

As discussed above, embodiments of the present disclosure relate to containment systems for electronic devices and more particularly to a smart safe console system and method as used to improve vehicle safety while utilizing features on electronic devices.

Generally, the present invention includes a console that may be compatible with a variety of electronic devices such as smart phones, smart watches, and smart glasses. The system may be installed in the area between an operator and a passenger, typically called the 'middle console', in any vehicle such as a train, boat, truck, or car. With electronic devices locked away in the safe of the present invention, the vehicle operator as able to devote their full attention to operation and passengers do not have to worry if the operator is texting on the electronic device, viewing a social media site, or is otherwise distracted. In some versions, the smart safe allows the driver to use the typical hands-free technology either supplied by the phone manufacturer or the car manufacturer or both. In these or other embodiments, the smart safe may have a screen or other controls to access the hands-free features while the phone is safely secured. A related feature allows a parent to allow children using the car to only receive or make calls using the hands-free features (while the phone is locked away) to the parents or someone designated by their parents.

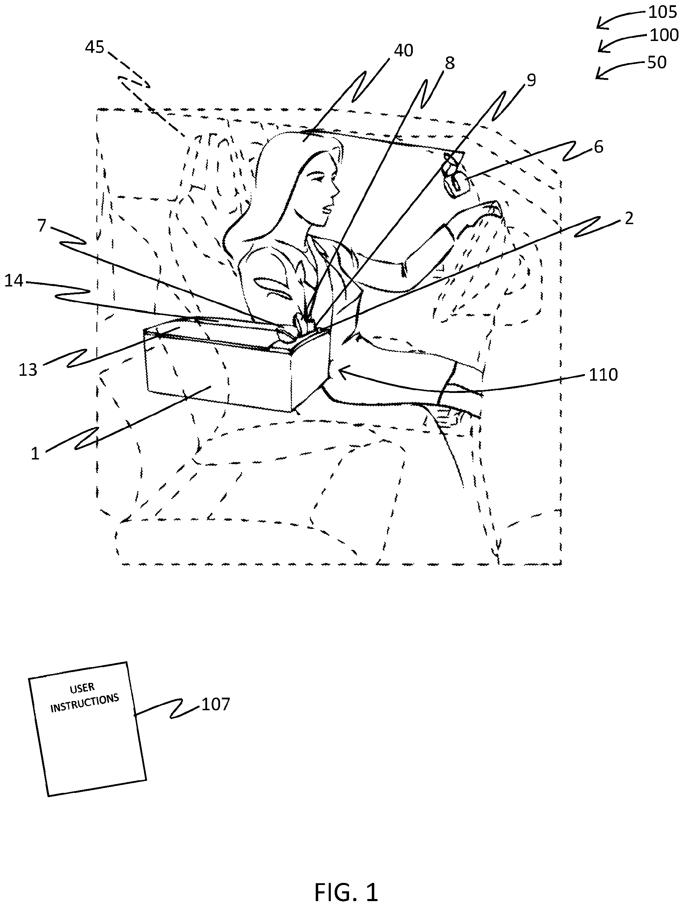

FIGS. 1 - 4 show various views of a smart safe console system 100. FIG. 1 shows the smart safe console system 100 during an 'in use' condition 50, according to an embodiment of the present disclosure. Here, smart safe console system 100 may be used by an operator 40 to improve vehicle safety in relation to the use of electronic devices 21. As illustrated, smart safe console system 100 may comprise a smart safe console assembly 110 including a smart safe body 1 suitable to house electronic device 21. Smart safe body 1 may isolate electronic device 21 from handheld use. For instance, system 100 may lock electronic device 21 inside system 100 while vehicle 45 operates.

Smart safe console assembly 110 may also include button 2 configured for controlling input and output communications to and from electronic device 21 (e.g., text messages) when vehicle 45, hosting smart safe console system 100, is in use. Smart safe console assembly 110 may communicate with a provider and with vehicle 45 and may control use of electronic device 21 in relation to operating vehicle 45. The provider may provide phone service or internet service to electronic device 21.

Vehicle 45 may host smart safe console system 100 such that smart safe console assembly 110 has a hardwired connection to vehicle 45 and, in some embodiments, is securely, permanently, or semi-permanently mounted in vehicle 45. Vehicle 45 may power smart safe console system 100. Alternatively, smart safe console assembly 110 may include a battery for powering smart safe console system 100. Smart safe console system 100 may employ AC or DC power distributed throughout smart safe console assembly 110 by a power supply (e.g. vehicle battery). Other powering means may be used and hardwired and non-hardwired versions may be employed.

Smart safe console assembly 110 may electrically connect to sensors that sense a condition of vehicle 45. A proximity sensor, a motion sensor, a speed sensor, an audio sensor, an impact sensor, or any combination of sensors may monitor a condition of vehicle 45. The sensors may provide one or more functions for smart safe console assembly 110 such as sending an automatically generated message from electronic device 21 to a desired message recipient when the impact sensor triggers. For example, the impact sensor may indicate that vehicle 45 has experienced a collision. The desired message recipient can be a family member, friend, or third party (i.e., police). Sensing means may vary.

Smart safe console system 100 may further comprise power connector 3, such as a cigarette lighter socket, along an exterior portion of smart safe body 1 for communicating and powering one or more external electrical accessories from smart safe console assembly 110.

Another aspect of the present invention provides for electronic device 21 to host or execute a software application (app). The app may register electronic device 21 with smart safe console assembly 110 and facilitate communication between electronic device 21 and smart safe console assembly 110. Operator may register the app by a phone number or other known identification means associated with electronic device 21. The app may link to the phone service such that the phone number can be stored in a national database operated by the phone service. The app may communicate with vehicle 45 hosting smart safe console system 100 such that the app can perform one or more vehicle functions (e.g., unlocking the vehicle, rolling down the windows, etc.). Further, the app may allow for personalization of features equipped with smart safe console assembly 110. In some embodiments, smart safe console system 100 communicates specific signals to the app when the safe opens, such as a signal to remind the user to update the app and allows the signals containing the update material to transfer to electronic device 21 despite being secured within smart safe console assembly 110. In some embodiments, updating occurs as electronic device 21 charges in smart safe console assembly 110. In other embodiments, updating occurs in smart safe console assembly 110 when electronic device 21 is not charging. According to one embodiment, smart safe console system 100 may be arranged as a kit 105 and may further include a set of instructions 107.

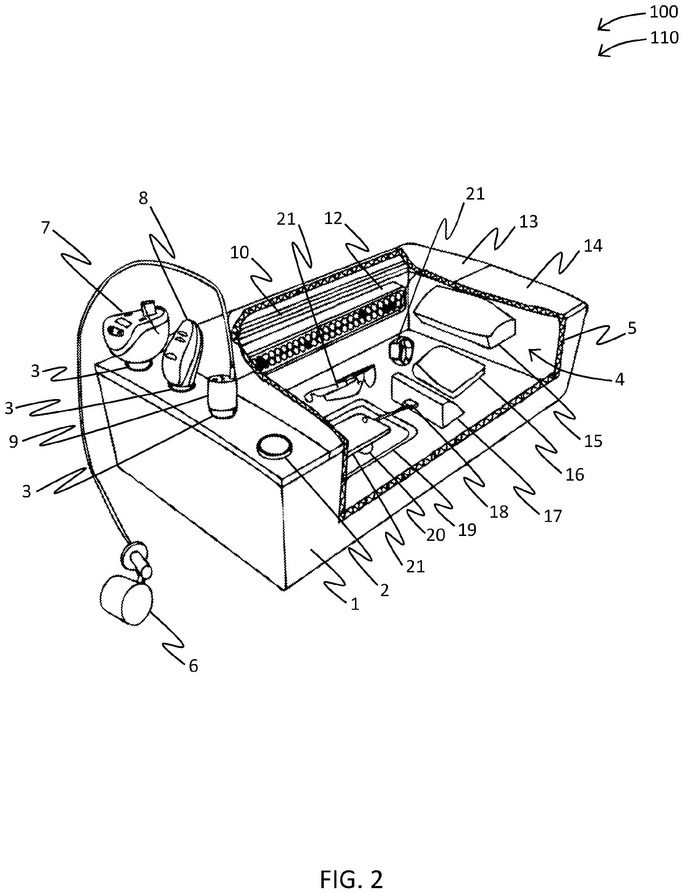

FIG. 2 shows smart safe console system 100 of FIG. 1, according to an embodiment of the present disclosure. As above, smart safe console system 100 may include smart safe console assembly 110 including smart safe body 1 suitable to house the 21. Input and output as described herein may include sending text or voice recorded messages. External electrical accessories may include transmitter 7, virtual assistant device 9, fragrance emitter 8, or combinations of these. Power connector 3 may communicably connect to smart safe console assembly 110 such that the external electrical accessories are in communication with the provider and with vehicle 45. Each of the external electrical accessories may connect with an adapter or otherwise connect with a powered electrical contact within the power connector 3.

Smart safe body 1 may further include left wing 13 and right wing 14 configured to move between an opened state and a closed state. When in the opened state, a user may insert or remove electronic device 21 from smart safe body 1. When in the closed state, smart safe body 1 may effectively isolate electronic device 21 from handheld use. Left wing 13 and right wing 14 may include a liner 5. Furthermore, the liner 5 may extend around the entire smart safe body 1. The liner 5 may comprise a sound proofing material that dampens and inhibits electronic device 21 sounds from reaching operator 40 of vehicle 45. Sounds generated from electronic device 21 may distract operator 40 unless otherwise dampened.

Smart safe body 1 may include interior housing 4 having one or more walls, left wing 13, and right wing 14. Smart safe body 1 can have in a variety of shapes and sizes that fit in vehicle 45. For example, smart safe body 1 may include a curved surface on one or more walls or be substantially 3D rectangular or square. The interior housing 4 may have an ultraviolet light disinfecting device 12 to destroy bacteria on one or more surfaces housed within smart safe body 1. The interior housing 4 may further include sunglasses holder 15, wallet holder 16, charging unit 17, and electrical connector 18 (U.S.P.Q. electric) docking station 19, battery 20, colored LED light strips 10, or any combination of these. The colored LED light strips 10 may be customized (i.e., changing of light colors) via the app. Additionally, the interior housing may contain other items not shown in FIG. 2, such as a cooling fan for example.

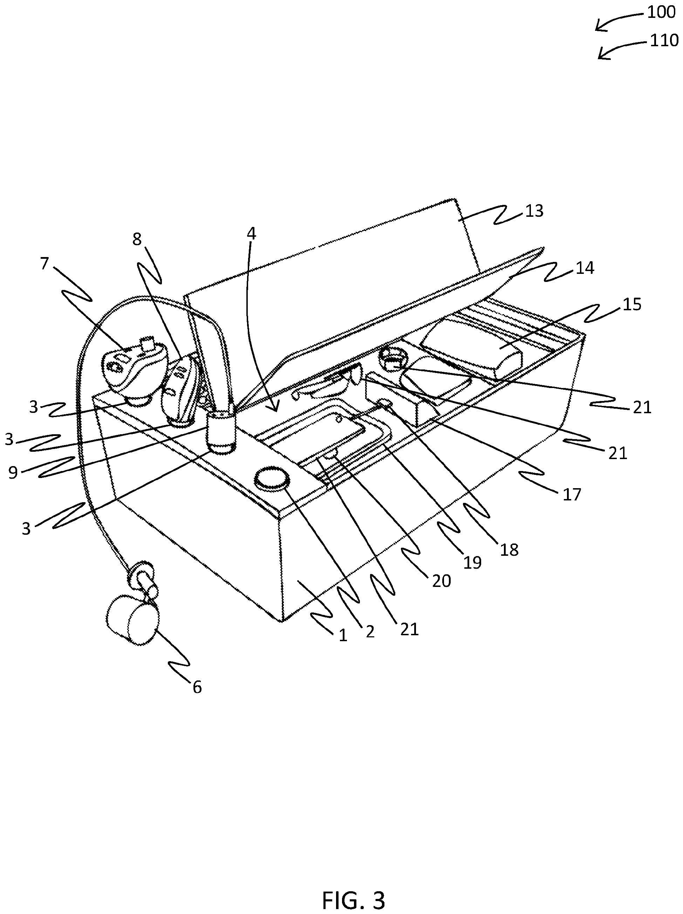

FIG. 3 is a perspective view of smart safe console system 100 of FIG. 1, left wing 13 and right wing 14 may open on opposite sides (as shown) or they may open on the same side.

Smart safe assembly 110 may communicate with a control module that prevents operation of vehicle 45 when assembly 110 does not 'sense' a connection with electronic device 21, and that permits operation of vehicle 45 when assembly 110 senses a connection with electronic device 21. Assembly 110 may also monitor whether smart safe body 1 is open or closed. The operation sensor may detect the condition such as the connection or open or closed state (discussed previously) send information to the control module regarding the condition. Assembly 110 or the app may require electronic device 21 to register with the app before responding to the condition. In some embodiments, this allows accounting for all electronic devices 21.

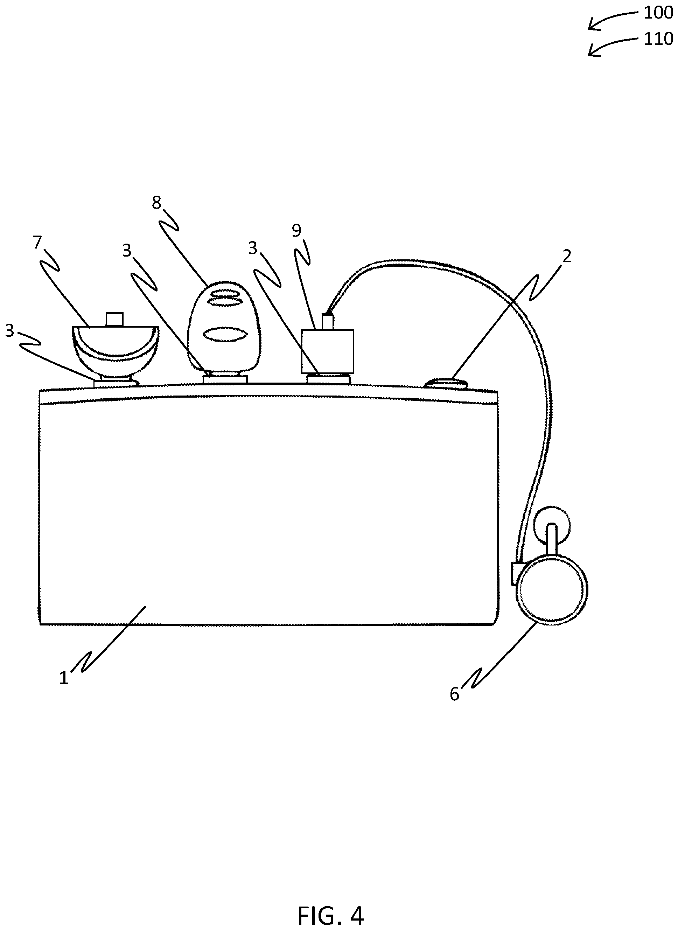

FIG. 4 is a front view of smart safe console system 100 of FIG. 1, according to an embodiment of the present disclosure.

Virtual assistant device 9 may be in communication with electronic device 21 (hosting the app) and button 2 and may be configured to enable voice input communication and voice output communication between virtual assistant device 9 and electronic device 21 when a signal is received from button 2. Commonly known virtual assistant devices 9 include AMAZON ECHO, ALEXA, and GOOGLE ASSISTANT all of which may be pre-equipped with one or more speaker(s) and microphone(s) to enable the voice input communication and the voice output communication. The voice input communication and the voice output communication may include asking and receiving information ranging from the weather report to any encyclopedia question. Further, operator 40 may personalize the voice input communication and the voice output communication via virtual assistant device 9 to provide voices to be male, female, celebrity, and the like. Virtual assistant device 9 may include a cord and a suction cup 6 such that virtual assistant device 9 can be fastened to the windshield of vehicle 45.

Virtual assistant device 9 may be in communication with a navigational system (e.g., GARMIN technology) hosted in vehicle 45 or on electronic device 21. Connecting virtual assistant device 9 allows electronic device 21 to remain in smart safe body 1 while operator 40 uses this navigation technology. Operator 40 can engage button 2 to provide voice input. The voice input may provide one or more services to operator 40 such as but not limited to voice recorded messages processed on virtual assistant device 9 to send to the desired recipient via the phone service (e.g., notifying the desired recipient when operator 40 is unable to respond due to driving or send approximate times when operator 40 will be free to respond based on information received by the navigational system), purchasing one or more items via the internet service, requesting a list of songs for playing on the radio, inputting personal information associated with operator 40 to be stored on electronic device 21, requesting specific responses based on the personal information (i.e. bank account information), etc. The voice output may provide one or more services to operator 40 such as reminders from the calendar on electronic device 21, reminders for ongoing conversations on electronic device 21, automatic updates for electronic device 21, responses to the voice input, and the like.

The transmitter 7 may communicate with a controller and a processor. The app may include a switch that enables communication between the transmitter 7 and the controller and the processor. Operator 40 may manually activate the switch via interfacing with the app or the navigational system can activate the switch by sending a signal that the desired destination (e.g., home) is less than a predetermined distance away. The controller and the processor may communicatively couple to one or more features within the desired destination to turn these features on/off. These features may include among other features controls for alarm systems, temperature, propane fireplaces, lighting systems, sound systems, and kitchen accessories.

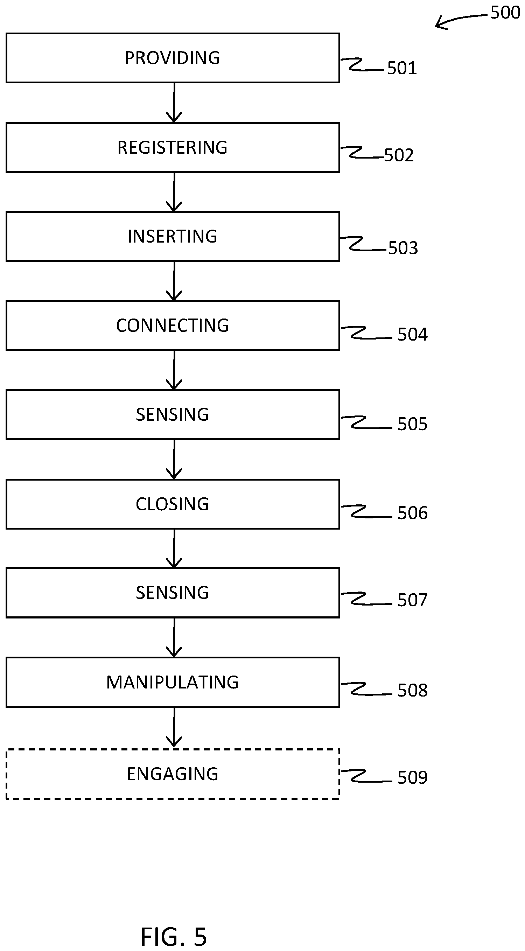

FIG. 5 is a flow diagram illustrating a method for using smart safe console system 500, according to an embodiment of the present disclosure. In particular, the method for using smart safe console system 500 may include one or more components or features of smart safe console system 100 as described above. As illustrated, the method for using smart safe console system 500 may include the steps of 501, providing smart safe console assembly 110 (as previously described) including smart safe body 1; step 502, registering electronic device 21 with an app in communication with smart safe assembly 110; step 503, inserting electronic device 21 into smart safe body 1; step 504, connecting electronic device 21 to a charging unit 17; step 505, sensing that an electronic device 21 is connected to the charging unit 17; step 506, closing smart safe body 1; step 507, sensing smart safe body 1 is closed; step 508, allowing vehicle 45 to turn on; and step 509, initializing button 2 for controlling the input and the output communications to and from electronic device 21.

It should be noted that step nine 509 is an optional step and may not be implemented in all cases. Optional steps of method of use 500 are illustrated using dotted lines in FIG. 5 so as to distinguish them from the other steps of method of use 500.

The extent of the protection conferred by the patent shall be determined by the claims. Nevertheless, the description and drawings shall be used to interpret the claims.

## Claims

1. A smart safe console system (100) comprising an assembly (110) mounted in a vehicle (45) including:
a safe body (1) that during vehicle use secures an electronic device (21);
a button (2) that controls input to and output from the electronic device (21); and
a control module configured to permit or prevent operation of the vehicle (45),
wherein the assembly (110) communicates with a provider and with the vehicle (45),
wherein during vehicle use the safe body (1) secures said electronic device (21) against physical access by isolating electronic device (21) within the safe body (1) away from handheld use,
wherein the safe body (1) opens and closes, and, when closed, the safe body (1) secures the electronic device (21) against physical access,
**characterized in that**
the control module is configured to prevent operation of the vehicle (45) when the electronic device (21) is not sensed in the safe body (1) and to permit the operation of the vehicle (45) when the electronic device (21) is sensed in the safe body (1).

2. The smart safe console system (100) of claim 1, wherein the assembly (110) communicates with one or more vehicle sensors to receive condition information about the vehicle (45).

3. The smart safe console system (100) of claim 2, wherein the one or more vehicle sensors are any one or any combination of a proximity sensor, a motion sensor, a speed sensor, an audio sensor, and audio loudness sensor, or an impact sensor.

4. The smart safe console system (100) of claim 3, further comprising a port for communicating with or powering at least one electrical accessory,
wherein the accessory includes a transmitter (7) configured to communicate with a controller and a processor.

5. The smart safe console system (100) of claim 4, wherein the button (2) initiates communication with a virtual assistant (9) of the electrical accessory or device (21).

6. The smart safe console system (100) of claim 5, wherein the electronic device (21) executes software application instructions that cause the device (21) to register and communicate with the assembly (110).

7. The smart safe console system (100) of claim 6, wherein the safe body includes soundproofing material.

8. The smart safe console system (100) of claim 7, further comprising a control module that permits vehicle operation when the electronic device (21) is secured.

9. A method comprising:
providing to a vehicle (45) a smart safe console assembly (110) as defined in claim 1, wherein a user can open or close the safe body (1) to access an interior of the safe body (1), and wherein during vehicle use the smart safe console assembly (110) controls device use;
registering the electronic device (21) with the smart safe assembly (110);
securing the electronic device (21) in the safe body (1);
connecting the electronic device (21) to a charging unit (17) disposed in the safe body (1);
sensing the electronic device connection to the charging unit (17), wherein sensing the electronic device (21) in the safe body (1) permits operation of the vehicle (45);
closing the safe body (1); and
operating the vehicle (45).

10. The method of claim 9, further comprising engaging the button (2).

## Patentansprüche

1. Intelligentes Sicherheitskonsolensystem (100), umfassend eine Anordnung (110), die in einem Fahrzeug (45) montiert ist, und aufweisend:
einen Sicherheitskörper (1), der während der Fahrzeugbenutzung eine elektronische Vorrichtung (21) sichert;
eine Taste (2), die die Eingabe in die elektronische Vorrichtung (21) und die Ausgabe aus der elektronischen Vorrichtung (21) steuert; und
ein Steuerungsmodul, das dazu eingerichtet ist, den Betrieb des Fahrzeugs zu erlauben oder zu verhindern (45),
wobei die Anordnung (110) mit einem Anbieter und mit dem Fahrzeug (45) kommuniziert, wobei während der Fahrzeugnutzung der Sicherheitskörper (1) die elektronische Vorrichtung (21) gegen physischen Zugriff sichert, indem er die elektronische Vorrichtung (21) innerhalb des Sicherheitskörpers (1) von einer handgehaltenen Nutzung fern hält,
wobei sich der Sicherheitskörper (1) öffnet und schließt und der Sicherheitskörper (1), wenn er geschlossen ist, die elektronische Vorrichtung (21) gegen physischen Zugriff sichert,
**dadurch gekennzeichnet, dass**
das Steuerungsmodul dazu eingerichtet ist, den Betrieb des Fahrzeugs (45) zu verhindern, wenn die elektronische Vorrichtung (21) nicht in dem Sicherheitskörper (1) erfasst wird, und den Betrieb des Fahrzeugs (45) zu erlauben, wenn die elektronische Vorrichtung (21) in dem Sicherheitskörper (1) erfasst wird.

2. Intelligentes Sicherheitskonsolensystem (100) nach Anspruch 1, wobei die Anordnung (110) mit einem oder mehreren Fahrzeugsensoren kommuniziert, um Zustandsinformationen über das Fahrzeug (45) zu empfangen.

3. Intelligentes Sicherheitskonsolensystem (100) nach Anspruch 2, wobei der eine oder die mehreren Fahrzeugsensoren einer oder eine beliebige Kombination von einem Näherungssensor, einem Bewegungssensor, einem Geschwindigkeitssensor, einem Audiosensor, einem Audio-Lautheitssensor und einem Aufprallsensor sind.

4. Intelligentes Sicherheitskonsolensystem (100) nach Anspruch 3, umfassend des Weiteren einen Port für die Kommunikation mit mindestens einem elektrischen Zubehör oder zur Stromversorgung mindestens eines elektrischen Zubehörs,
wobei das Zubehör einen Sender (7) umfasst, der dazu eingerichtet ist, mit einem Controller und einem Prozessor zu kommunizieren.

5. Intelligentes Sicherheitskonsolensystem (100) nach Anspruch 4, wobei die Taste (2) die Kommunikation mit einem virtuellen Assistenten (9) des elektrischen Zubehörs oder der Vorrichtung (21) initiiert.

6. Intelligentes Sicherheitskonsolensystem (100) nach Anspruch 5, wobei die elektronische Vorrichtung (21) Software-Anwendungsinstruktionen ausführt, die die Vorrichtung (21) veranlassen, sich bei der Anordnung (110) zu registrieren und mit der Anordnung (110) zu kommunizieren.

7. Intelligentes Sicherheitskonsolensystem (100) nach Anspruch 6, wobei der Sicherheitskörper schalldämmendes Material aufweist.

8. Intelligentes Sicherheitskonsolensystem (100) nach Anspruch 7, umfassend des Weiteren ein Steuerungsmodul, das den Fahrzeugbetrieb erlaubt, wenn die elektronische Vorrichtung (21) gesichert ist.

9. Verfahren, umfassend:
Bereitstellen, für ein Fahrzeug (45), einer intelligenten Sicherheitskonsolenanordnung (110) nach Anspruch 1, wobei ein Benutzer den Sicherheitskörper (1) öffnen oder schließen kann, um auf das Innere des Sicherheitskörpers (1) zuzugreifen, und wobei während der Fahrzeugbenutzung die intelligente Sicherheitskonsolenanordnung (110) die Vorrichtungsverwendung steuert;
Registrieren der elektronischen Vorrichtung (21) bei der intelligenten Sicherheitskonsolenanordnung (110);
Sichern der elektronischen Vorrichtung (21) in dem Sicherheitskörper (1);
Verbinden der elektronischen Vorrichtung (21) mit einer Ladeanordnung (17), die in dem Sicherheitskörper (1) angeordnet ist;
Erfassen der Verbindung der elektronischen Vorrichtung mit der Ladeanordnung (17), wobei das Erfassen der elektronischen Vorrichtung (21) in dem Sicherheitskörper (1) den Betrieb des Fahrzeug (45) erlaubt; Schließen des Sicherheitskörpers (1); und
Betreiben des Fahrzeugs (45).

10. Verfahren nach Anspruch 9, umfassend des Weiteren das Betätigen der Taste (2).

## Revendications

1. Système de console de sécurité intelligente (100) comprenant un ensemble (110) monté dans un véhicule (45) comprenant :
un corps de sécurité (1) qui, pendant l'utilisation du véhicule, protège un dispositif électrique (21) ;
un bouton (2) qui commande l'entrée et la sortie du dispositif électronique (21) ; et
un module de commande configuré pour permettre ou empêcher le fonctionnement du véhicule (45),
dans lequel l'ensemble (110) communique avec un fournisseur et avec le véhicule (45),
dans lequel, pendant l'utilisation du véhicule, le corps de sécurité (1) protège ledit dispositif électronique (21) contre l'accès physique en isolant le dispositif électronique (21) dans le corps de sécurité (1) à l'opposé de l'utilisation portable,
dans lequel le corps de sécurité (1) s'ouvre et se ferme et lorsqu'il est fermé, le corps de sécurité (1) protège le dispositif électronique (21) contre l'accès physique,
**caractérisé en ce que** :
le module de commande est configuré pour empêcher le fonctionnement du véhicule (45) lorsque le dispositif électronique (21) n'est pas détecté dans le corps de sécurité (1) et pour permettre le fonctionnement du véhicule (45), lorsque le dispositif électronique (21) est détecté dans le corps de sécurité (1).

2. Système de console de sécurité intelligente (100) selon la revendication 1, dans lequel l'ensemble (110) communique avec un ou plusieurs capteurs de véhicule pour recevoir l'information d'état concernant le véhicule (45).

3. Système de console de sécurité intelligente (100) selon la revendication 2, dans lequel les un ou plusieurs capteurs de véhicule sont l'un quelconque ou n'importe quelle combinaison d'un capteur de proximité, d'un capteur de mouvement, d'un capteur de vitesse, d'un capteur audio et d'un capteur de volume sonore ou d'un capteur d'impact.

4. Système de console de sécurité intelligente (100) selon la revendication 3, comprenant en outre un port pour communiquer avec ou alimenter au moins un accessoire électrique,
dans lequel l'accessoire comprend un émetteur (7) configuré pour communiquer avec un organe de commande et un processeur.

5. Système de console de sécurité intelligente (100) selon la revendication 4, dans lequel le bouton (2) initie la communication avec un assistant virtuel (9) de l'accessoire ou dispositif électrique (21).

6. Système de console de sécurité intelligente (100) selon la revendication 5, dans lequel le dispositif électronique (21) exécute des instructions d'application logicielle qui amènent le dispositif (21) à s'aligner et à communiquer avec l'ensemble (110).

7. Système de console de sécurité intelligente (100) selon la revendication 6, dans lequel le corps de sécurité comprend un matériau d'insonorisation.

8. Système de console de sécurité intelligente (100) selon la revendication 7, comprenant en outre un module de commande qui permet le fonctionnement du véhicule lorsque le dispositif électronique (21) est protégé.

9. Procédé comprenant les faits de :
doter un véhicule (45), d'un ensemble de console de sécurité intelligente (110) selon la revendication 1, dans lequel un utilisateur peut ouvrir ou fermer le corps de sécurité (1) afin d'avoir accès à un intérieur du corps de sécurité (1), et dans lequel, pendant l'utilisation du véhicule, l'ensemble de console de sécurité intelligente (110) commande l'utilisation du dispositif ;
aligner le dispositif électronique (21) avec l'ensemble de sécurité intelligente (110) ;
protéger le dispositif électronique (21) dans le corps de sécurité (1) ;
raccorder le dispositif électronique (21) à une unité de charge (17) disposée dans le corps de sécurité (1) ;
détecter le raccordement du dispositif électronique avec l'unité de charge (17), dans lequel le fait de détecter le dispositif électronique (21) dans le corps de sécurité (1) permet le fonctionnement du véhicule (45) ;
fermer le corps de sécurité (1) ; et
actionner le véhicule (45).

10. Procédé selon la revendication 9, comprenant en outre le fait de mettre en prise le bouton (2).
